# EUROPEAN PATENT SPECIFICATION

(11) **EP 3 178 315 B1**
(45) Date of publication and mention of the grant of the patent: **26.09.2018**
(21) Application number: 16202902.9
(22) Date of filing: 08.12.2016
(51) Int. Cl.: A01K 1/01, A01K 1/015

(54) **VEHICLE AND SYSTEM FOR DISTRIBUTING LITTER MATERIAL IN AN ACCOMMODATION FOR AN ANIMAL**
FAHRZEUG UND SYSTEM ZUR VERTEILUNG VON TIERSTREUMATERIAL IN EINER UNTERBRINGUNGSBOX FÜR EIN TIER
VÉHICULE ET SYSTÈME DE DISTRIBUTION DE LITIÈRE DANS UN LOGEMENT POUR UN ANIMAL

(30) Priority: 10.12.2015 NL 2015932
(43) Date of publication of application: 14.06.2017
(73) Proprietor: Triodor Arge, 34852 Istanbul (TR)
(72) Inventor: SIRIN, Mustafa, 34852 Maltepe - Istanbul (TR)
(74) Representative: Octrooibureau Van der Lely N.V.

(56) References cited:
- WO-A1-00/70939
- WO-A1-2014/046540
- FR-A1- 2 765 070
- US-A- 3 922 838

## Description

The present invention relates to a vehicle and system for distributing litter material in an accommodation for an animal.

Accommodations for animals, such as cow sheds, need to be regularly cleaned. Cleaning may also include the distribution of fresh litter material in such accommodation, in particular on the floor surface of cubicles or other resting areas for the animals. This may be time-consuming work.

Therefore, there is a need for unmanned vehicles which can be used for distributing litter material over the floor of an animal accommodation, in particular in cubicles. These vehicles may be configured to autonomously move over the floor surface to move to locations where the presence of fresh litter material is desired.

US3922838 discloses a stack forming machine adapted to move across a field with a pick up for picking up crop material and propelling it into a stack forming chamber. A packing roll is provided movable over the top of the stack between both chamber ends to compact the crop material. The rear end wall of the stack forming chamber can be pivoted rearwardly and upwardly before unloading the stack on the field. A floor conveyor is provided for moving the stack rearwardly when unloading.

WO 2014/046540 discloses a system for distributing litter material in an accommodation for animals. This system for distributing litter material is integrated in a cleaning system for cleaning a stable floor, in particular for cleaning a higher floor surface in the stable, such as the floor surface of a cubicle.

The system of WO 2014/046540 comprises a home station and an unmanned vehicle.

The vehicle comprises a contact cleaning device to clean a floor surface by moving the contact cleaning device over the floor surface. The vehicle also comprises a spreading device to spread, when desired, litter material over the floor surface, preferably after it has been cleaned by the contact cleaning device. The vehicle comprises a container to hold the litter material before it is dispensed by a dispensing device from the vehicle.

The home station comprises a storage container for litter material and functions as a filling station to fill the litter material container in the vehicle with litter material when the litter material container is substantially depleted.

To refill the litter material container, the vehicle can be driven under a litter material outlet of the storage home station. When the vehicle is positioned with its filling opening under the litter material outlet, litter material can be dispensed into the container of the vehicle.

A drawback of the system of WO 2014/046540 is that the litter material container of the vehicle has an open top that functions as filling opening for the litter material. The open top provides free access to the container for new litter material, but also for other materials, such as manure.

Furthermore, when litter material falls into the filling opening, the litter material may not move to the dispensing device. As a result, the quantity of litter material dispensed from the dispensing device may not properly be controlled, and litter material may get stuck in the container or its opening and no longer be dispensed by the dispensing device.

It is desirable that vehicle for cleaning floor surfaces of an accommodation for an animal and/or vehicles configured to transport litter material within or to an accommodation for an animal can autonomously move within or to the accommodation in order to automatically carry out its task. Such vehicle configured to drive autonomously over the floor surface is for example disclosed in WO 2014/046540. It is an aim of the present invention to provide an improved vehicle and/or system for distributing litter material in an accommodation for an animal, or at least to provide an alternative therefor.

The invention provides a vehicle as claimed in claim 1.

According to invention, the container comprises a filling opening for the introduction of litter material into the container and a filling opening cover which is movable, for example rotatable, between a closed position and an open position. The filling opening cover prevents, in its closed position, that material can enter into the container, when the vehicle is not positioned in the filling station. In this way it is avoided that other material, such as manure, inadvertently will fall into the container of the vehicle.

When the vehicle is arranged in its filling position in the filling station, the filling opening cover can be arranged in the open position to allow filling of the container with litter material.

The container comprises a pusher element that is movably arranged in the container and configured to push litter material towards the dispensing opening. The pusher element ensures that litter material that is introduced into the container is moved towards the dispensing opening, and, as a result, that the quantity of litter material that may be dispensed from the container can properly be controlled.

The filling opening cover is configured to be moved from the closed position to the open position by a movement of the pusher element. By mechanical synchronisation of the pusher element and the filling opening cover it is ensured that the container of the vehicle will only be filled when the pusher element is in a suitable position for filling. In this way, it can be avoided that litter material will fall at the side of the pusher element facing away from the dispensing opening.

Furthermore, no separate actuator is needed to move the filling opening cover between the closed and open position, which makes the vehicle less complex and less expensive.

In an embodiment, the filling opening cover is configured to actuate, in its open position, a filling device of a filling station to release litter material. The container can only be filled with litter material when the filling opening cover is in the open position. By using the filling opening cover in its open position to actuate the filling device of a filling station, it is ensured that the filling opening cover is open when the container is filled with litter material. At the same time no additional sensor is required to check the position of the filling opening cover.

In an embodiment, the filling opening cover is rotatably mounted to the vehicle. By rotatably mounting the filling opening cover to the vehicle the mechanical actuation of the cover by the pusher element can be realized in a simple manner and with less force than e.g. by having a sliding cover.

In an embodiment, the pusher element is movable towards and away from the dispensing opening, wherein the filling opening cover is moved to the open position by a movement of the pusher element away from the dispensing opening.

The pusher element is provided to push the litter material towards the dispensing opening of the container. To ensure that the litter material is introduced at the correct side of the pusher element, i.e. between the pusher element and the dispensing opening, the filling opening cover may be designed to be opened by the pusher element when it is moved away from the dispensing opening to a pusher element filling position in which the filling opening is arranged between the pusher element and the dispensing opening such that litter material will be introduced into the container between the pusher element and the dispensing opening.

In an embodiment, the pusher element comprises a first contact surface and the filling opening cover comprises a second contact surface, wherein during the movement of the pusher element away from the dispensing opening the first contact surface is pushed against the second contact surface to move the filling opening cover from the closed position to the open position. In this embodiment, the movement of the filling opening cover to the open position by the movement of the pusher element is carried out by a mechanical actuation by pushing the first contact surface against the second contact surface.

In an embodiment, the vehicle comprises a vehicle cover, wherein the filling opening cover is mounted on the vehicle cover. A vehicle cover may be provided to cover the different parts of the vehicle and protect these parts from external influences such as dirt and water. The vehicle cover may further be designed to absorb impacts, for example of animals standing on or kicking against the vehicle. The vehicle cover may also provide an attractive appearance to the vehicle.

The filling opening may be provided in the vehicle cover and the filling opening cover may be mounted on the vehicle cover.

The vehicle cover may be movable with respect to a chassis of the vehicle between a closed position and an open position in order to provide access to the different parts covered by the vehicle cover in the closed position of the vehicle cover. When the filling opening cover is mounted on the vehicle cover, it may move together with the vehicle cover between the closed position and the open position of the vehicle cover.

In an embodiment, the vehicle is a cleaning vehicle and comprises a contact cleaning device configured to clean the floor surface of the accommodation by moving over the floor surface while the contact cleaning device is in contact with the floor surface. In this embodiment, the vehicle is configured to clean the floor surface of an accommodation of the animal. When desired the cleaned floor surface may be covered with a layer of litter material, for instance in a cubicle or resting area for the animal.

The contact cleaning device is for example a scraper device that can clean the floor surface by scraping the scraping device over the floor surface and therewith moving manure and/or other dirt on the floor surface to a desired location, for example slots provided in the floor surface to discharge the manure and/or dirt into a manure container provided below the floor surface of the accommodation.

In an embodiment, the vehicle comprises a tilting device to tilt a main body of the vehicle between a tilted position in which the vehicle can be moved over the floor surface without contact between the contact cleaning device and the floor surface, and a cleaning position in which the vehicle can be moved over the floor surface with contact between the contact cleaning device and the floor surface.

In order to move the vehicle having a contact cleaning device over the floor surface without the contact cleaning device being in contact with the floor surface and/or in order to allow the cleaning vehicle to clean a floor surface that is higher than the floor surface over which the vehicle moves, a tilting device may be provided in the vehicle to tilt the vehicle between a tilted position in which there is no contact between the contact cleaning device and the floor surface and a cleaning position in which the contact cleaning device is in contact with the floor surface. Such cleaning vehicle having a tilting device is for example disclosed in WO 2014/046540.

In an embodiment, the vehicle comprises a dispensing device to dispense material from the container through the dispensing opening. The vehicle of the invention is configured to transport litter material to a desired location in the accommodation for an animal. When the vehicle has moved to the desired location, it is desirable that a desired quantity of the litter material is dispensed from the container. To make controlled dispensing of the litter material possible, the vehicle may comprise a dispensing device to actively dispense material from the container through the dispensing opening. The dispensing device is for example a dosing roller arranged in the dispensing opening to dose litter material from the container. A dosing roller, i.e. a roller having axial wings projecting from a central core and distributed along the circumference of the central core of the roller, arranged in the dispensing opening can be used to dispense a desired quantity of litter material from the container. Each spacing between a pair of wings forms a compartiment for litter material, upon rotation the litter material is transported to the dispensing opening. The amount of litter being dispensed can be controlled by the spacing between the wings and by controlling the number of rotations of the roller. In an alternative embodiment, a dispensing valve may be provided to dispense litter material from the container. The dispensing valve may be movable between a closed position and an open position. In the open position litter material may be dispensed from the container, while the dispensing valve closes the dispensing opening when it is in the closed position.

The invention further provides a system for transporting litter material to or within an accommodation for an animal, comprising:
- an unmanned wheeled vehicle as claimed in any of the claims 1-9, and
- a filling station, said filling station comprising:
   - a storage container to hold a quantity of litter material, and
   - a filling device configured to dispense a quantity of litter material into the container of the vehicle when the vehicle is positioned in a filling position with respect to the filling station, wherein the filling station comprises a sensor to determine whether the vehicle is arranged in the filling position with the filling opening cover in the open position.

The unmanned vehicle of the invention comprises a container to hold a quantity of litter material. This vehicle is configured to drive autonomously over the floor surface of an accommodation for an animal to transport and dispense the litter material at a desired location. When the container is empty or almost empty, it is desirable that the container is refilled with litter material.

To refill the container, the filling station comprises a storage container to hold a quantity of litter material and a filling device. The filling device is configured to dispense a quantity of litter material into the container of the vehicle when the vehicle is positioned in a filling position with respect to the filling station. The filling station further comprises a sensor to determine whether the vehicle is arranged in the filling position with the filling opening cover in the open position. The sensor is for example a mechanical contact sensor or an optical sensor. Any other type of suitable sensor may also be used.

The filling device may be configured to automatically dispense a quantity of litter material when the filling station receives a signal from the sensor representative for the vehicle being arranged in the filling position with the filling opening cover in the open position. In another embodiment, the filling device may be configured to dispense a quantity of litter material as soon as the sensor has determined that the vehicle whether the vehicle is arranged in the filling position with the filling opening cover in the open position and a filling signal has been provided by a processing device or such.

The filling device may comprises a rotatable drum arranged at or in a litter material outlet of the storage container, and a driving device to drive the rotatable drum. Any other suitable type of filling device may also be used.
An embodiment of an unmanned vehicle for transporting litter material and a system for transporting litter material comprising such vehicle according to the invention will now be described in further detail, by way of example only, with reference to the accompanying drawings, in which:
- Figure 1 shows a first embodiment of a system for transporting litter material according to the invention;
- Figures 2-5 show steps of filling the litter material container of the vehicle at the filling station;
- Figure 6 shows the vehicle in the tilted position while dispensing litter material; and Figure 7 shows the vehicle with the vehicle cover in the open position.

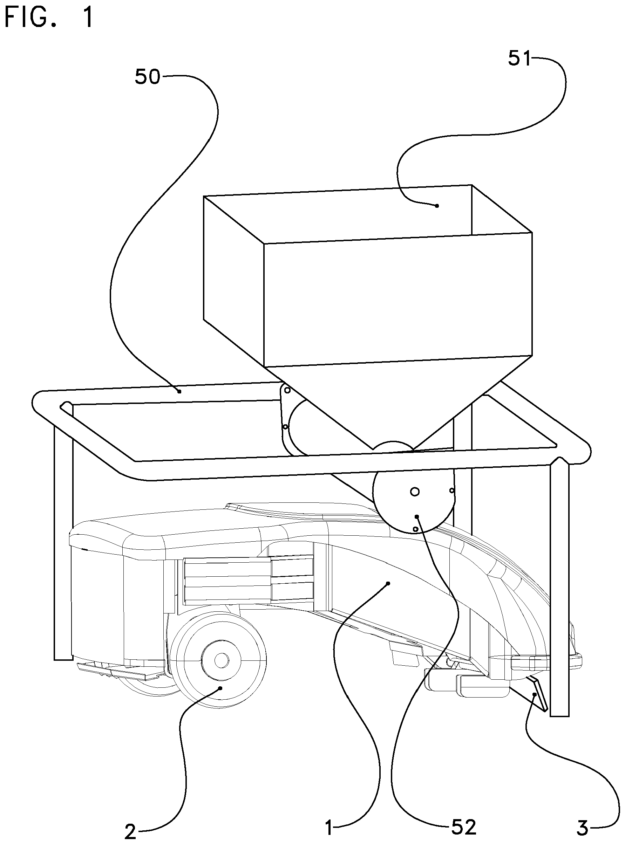

Figure 1 shows an embodiment of a system of the invention comprising an unmanned wheeled vehicle 1 for transporting litter material to or within an accomodation for an animal. The vehicle 1 is shown to comprise two wheels 2 and is configured to drive autonomously over a floor surface 100 of an accommodation of an animal.

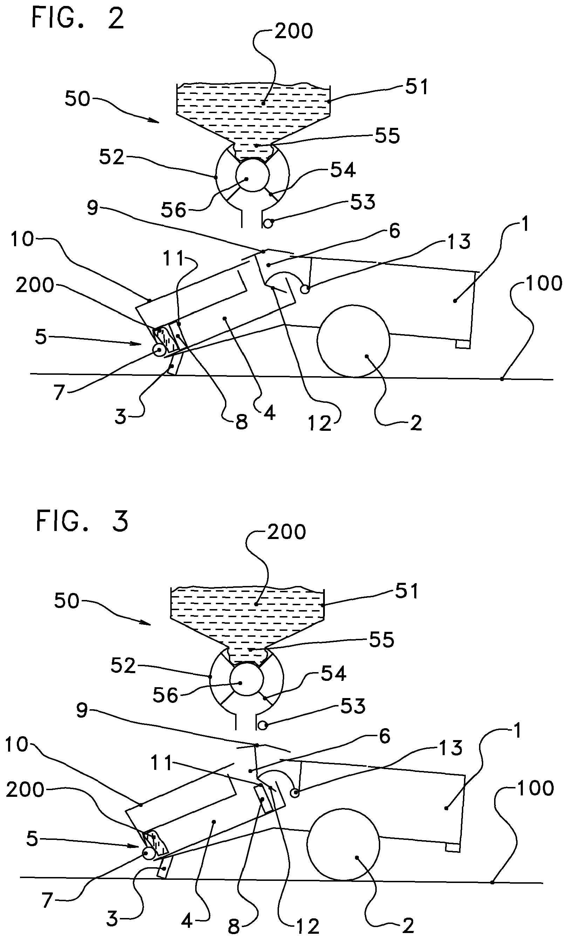

As best visible in figures 2-5, the vehicle includes a container 4 to hold a quantity of litter material 200 and has a dispensing opening 5 for dispensing litter material from the container.

The container 4 includes a filling opening 6 for introduction of the litter material 200 into the container. The litter material 200 will be provided by filling station 50. The filling opening cover 9 is provided with which the filling opening 6 can be closed off. The filling opening cover 9 is thus provided to be movable between a closed position, i.e. covering the filling opening 6, and an open position, i.e. at least partially not covering the filling opening 6. In the container 4 of the vehicle 1 a pusher element 8 is provided which is movable towards and away from the dispensing opening 5, and will push litter material towards the dispensing opening when moving towards it. The pusher element 8 when it moves back upwards, i.e. away from the dispensing opening, will engage a portion of the filling opening cover 9 push it to the open position and thus effectuate the opening of the filling opening 6.

To refill the container of the vehicle 1, the filling station 50 comprises a storage container 51 to hold a quantity of litter material and a filling device 52. The filling device 52 is configured to dispense a quantity of litter material into the container of the vehicle 1 when the vehicle 1 is positioned in a filling position, as shown in Figure 1, with respect to the filling station 50.

The filling station 50 may also comprise other devices to service the vehicle 1, such as a battery charger to charge the battery of the vehicle 1 and a network connection device to connect the vehicle with a general network.

Figures 2-5 show cross sections of the vehicle 1, with the container 4, and the dispensing and filling openings 5, 6 together with the filling station 50. In the dispensing opening 5 a dispensing device 7 is arranged. The dispensing device 7 is a dosing roller that can be rotated to dispense litter material 200 from the container 4. The dosing roller may be in the shape of a roller having axial wings projecting from a central core and distributed along the circumference of the central core of the roller, arranged in the dispensing opening. Each spacing between a pair of wings forms an open top compartiment for litter material, upon rotation the litter material is transported to the dispensing opening.

In the container 4, a pusher element 8 is provided. The pusher element 8 is movable towards and away from the dispensing opening 5 to enable the pusher element 8 to push litter material 200 towards the dispensing opening 5. The pusher element 8 and container function as a piston cylinder assembly. The pusher element 8 is actuable by a pusher element driving device, for example an electric or pneumatic actuator (not shown).

The filling opening 6 is provided to refill the container 4 at the filling station, for example when the container is empty or almost empty or when the vehicle 1 is at the filling station 50 for another reason, such a recharging of the battery, and filling of the container 4 is desirable.

To avoid that other material such as manure or dirt may fall into the filling opening 6, a movable filling opening cover 9 is provided. The filling opening cover 9 is rotatably mounted to a vehicle cover 10. The vehicle cover 10 is a plate shaped element or combination of elements that covers the different parts of the vehicle to protect the parts from dirt, water etc.

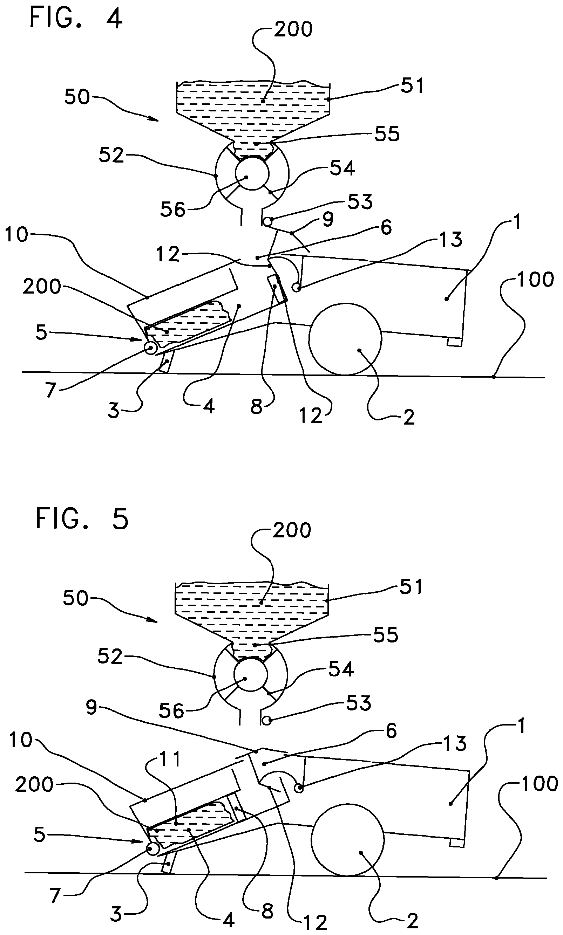

The movable filling opening cover 9 is movable between a closed position (Figure 2), in which the filling opening cover 9 covers the filling opening 6, and an open position (Figure 4), in which the container 4 can be filled at the filling station 50. The filling opening cover 9 is configured to be pushed from the closed position to the open position by movement of the pusher element 8 away from the dispensing opening 5.

In order to properly fill the container, i.e. to prevent that the litter material that enters the container 4 via the filling opening 6 falls at the side of the pusher element 8 facing away from the dispensing opening 5, the pusher element 8 has to be brought, before filling of the container 4, to a pusher element filling position spaced from the dispensing opening 5 such the that the litter material 200 that enters the container via the filling opening fall between the pusher element 8 and the dispensing opening 5.

This movement of the pusher element 8 to the pusher element filling position is also used to move the filling opening cover 9 from the closed position to the open position. For this reason, the pusher element 8 comprises a first contact surface 11 and the filling opening cover comprises a second contact surface. During the movement of the pusher element 8 away from the dispensing opening 5 the first contact surface 11 is pushed against the second contact surface 12 to push the filling opening cover 9 from the closed position to the open position.

Figure 2 shows the pusher element in a position to push litter material towards the dispensing opening, and the filling opening cover 9 is positioned in the closed position. To enable filling of the container 4 with litter material, the pusher element 8 is moved away from the dispensing opening 5.

Figure 3 shows the vehicle during movement of the pusher element 8 towards the pusher element filling position. The first contact surface 11 is placed against the second contact surface 12, and the filling opening cover is rotated about the rotation axis 13 from the closed position towards the open position.

Figure 4 shows the pusher element 8 in the pusher element filling position, such that the container 4 can be properly filled with litter material 200. It can be seen that the movement of the pusher element 8 has rotated, by pushing of the first contact surface 11 against the second contact surface 12, the filling opening cover 9 to the open position such that the filling opening 6 is no longer covered by the filling opening cover 9 and the container 4 can be filled by the filling device 52.

The filling station 50 comprises a sensor 53, that determines that the filling opening cover 9 is in the open position.

The sensor 53 is for instance a mechanical contact sensor or an optical sensor, or any other sensor that can determine that the filling opening cover 9 is in the open position, while the vehicle 1 is positioned in the filling position with respect to the filling station 50. It is remarked that when the vehicle 1 is not in the correct filling position with respect to the filling station 50, the sensor 53 will not be able determine the open position of the filling opening cover 9, or, in addition or as an alternative, another sensor will determine that the vehicle is not in a correct position for filling of the container 4.

Once the sensor 53 has determined that the vehicle 1 is positioned in the filling position with the filling opening cover 9 in the open position, the sensor 53 may provide a corresponding signal to the filling device 52. The filling device 52 is configured to dispense a quantity of litter material 200, when the filling device 52 receives this signal from the sensor 53. It is remarked that the signal may be an electrical or electronic signal, but also any other suitable signal such as a mechanical signal.

The filling device 52 comprises a rotatable drum 54 arranged at a litter material outlet 55 of the storage container 51, and a driving device 56 to drive the rotatable drum 54. As soon as the signal is received by the filling device 52, the driving device 56 will drive the rotatable drum 54 in a rotating movement to dispense litter material 200 from the storage container 51 into the filling opening 6 of the container 4 of the vehicle 1.

After the container 4 has been filled with a desired quantity of litter material 200, the pusher element 8 may be moved back towards a pushing position closer to the dispensing opening 5 in order to push the litter material to the dispensing opening 5 to enable proper dispensing of the litter material. The pusher element 8 will then no longer hold the filling opening cover in the open position and gravity force will automatically return the filling opening cover 9 to the closed position.

Figure 5 shows the vehicle 1 after filling of the container, and after the filling opening cover 9 has been moved back to the closed position. The vehicle 1 may now autonomously drive to areas in the accommodation for animals to clean the floor surface 100 and/or to distribute litter material from the container 4.

The advantage of the vehicle 1 and system comprising the vehicle 1 and the filling station 50 is that in order to enable filling of the container 4, a single movement of the pusher element 8 is used to move the pusher element to the pusher element filling position and to move the filling opening cover to the open position. Furthermore, the open position of the filling opening cover 9 is used by the filling station 50 to determine via a sensor 53 whether the vehicle 1 is in the filling position with the filling opening cover 9 in the open position. Thereby, the filling opening cover 9 in the open position can be used to actuate the filling device 52 to automatically dispense litter material when the sensor 53 determines that the vehicle 1 is in the filling position and the filling opening cover 9 is in the open position.

The vehicle 1 is further configured to clean the floor surface of an accommodation for an animal by scraping a scraping device 3 over the floor surface 100. The scraping device 3 may for example be used to scrape manure to another location for further removal.

The vehicle also comprises a spreading device to spread, when desired, litter material over the floor surface, for example in cubicles or other resting areas, in particular after it has been cleaned by the contact cleaning device. Also, it may be desirable to only spread litter material. The spreading device comprises a container to hold a quantity of litter material. When the container is empty or almost empty, it is desirable that the container is refilled with litter material. Litter material may for instance be saw dust, sand, straw or other particles that are used to cover a floor surface of accommodation of an animal, in particular a cubicle or resting area.

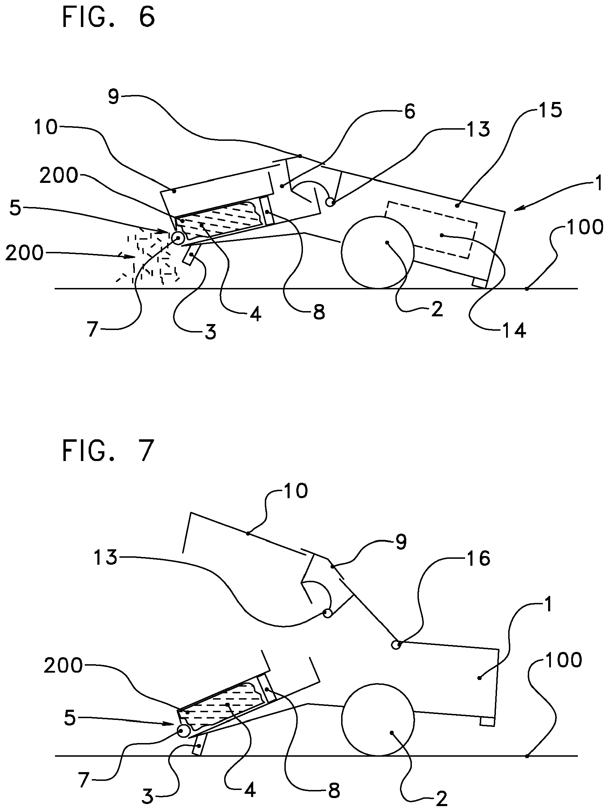

Figure 6 shows the vehicle 1 in a tilted position with respect to the position shown in Figures 2-5. The vehicle comprises a tilting device 14 to tilt a main body 15 of the vehicle between a tilted position (Figure 6), in which the vehicle 1 can be moved over the floor surface without contact between the scraper device 3 and the floor surface 100, and a cleaning position (Figures 2-5), in which the vehicle 1 can be moved over the floor surface 100 with contact between the scraper device 3 and the floor surface 100.

Please note, that although not shown in the figures, generally the floor surface of a cubicle is at a higher level than the level where the vehicle is moving about. Thus, when dispensing litter material onto the higher level floor surface of cubicle it is desirable that the dispensing opening 5 is spaced from that higher level cubicle floor surface. Similarly, when cleaning of the higher lever cubicle floor surface is desired, the scraper device 3 must be able to contact that cubicle floor surface. In such cases the tilting device 14 may be actuated to tilt the main body of the 15 of the vehicle 1 to the tilted position as shown in Figure 6.

In Figure 6, it is further shown how litter material 200 is dispensed by the dispensing device 7 from the dispensing opening 5 of the container 4. It is remarked that the dispensing opening 5 and/or dispensing device 7 may extend over the width of the vehicle 1 to dispense litter material over the width of the vehicle 1.

Figure 7 shows the vehicle 1 with a vehicle cover 10 that is rotatable about an axis of rotation 16 in order to obtain access to the parts of the vehicle 1 that are arranged below the vehicle cover 1.

Since the filling opening cover 9 is rotatably mounted on the vehicle cover 10, the filling opening cover 9 does not prevent the movement of the vehicle cover about the axis of rotation 16 towards an open position.

**Reference numerals**

| | |
|---|---|
| 1 | vehicle |
| 2 | wheels |
| 3 | scraping device |
| 4 | container |
| 5 | dispensing opening |
| 6 | filling opening |
| 7 | dispensing device |
| 8 | pusher element |
| 9 | filling opening cover |
| 10 | vehicle cover |
| 11 | first contact surface |
| 12 | second contact surface |
| 13 | rotation axis |
| 14 | tilting device |
| 15 | main body |
| 16 | axis of rotation |
| 50 | filling station |
| 51 | storage container |
| 52 | filling device |
| 53 | sensor |
| 54 | rotatable drum |
| 55 | litter material outlet |
| 56 | driving device |
| 100 | floor surface |
| 200 | litter material |

## Claims

1. An unmanned wheeled vehicle (1) for transporting litter material (200) to or within an accommodation for an animal, said vehicle (1) comprising a container (4) to hold a quantity of litter material (200) and having a dispensing opening (5) for dispensing litter material (200) from the container (4),
**characterized in that** the container (4) comprises a filling opening (6) for the introduction of litter material (200) into the container (4) and a filling opening cover (9) which is movable between a closed position, in which the filling opening (6) is substantially covered by the filling opening cover (9) and an open position, in which the filling opening (6) is, at least partially, not covered by the filling opening cover (9) to allow the container (4) to be filled with litter material (200),
wherein container (4) comprises a pusher element (8) movably arranged in the container (4) and configured to push litter material (200) towards the dispensing opening (6), and wherein the filling opening cover (9) is configured to be moved from the closed position to the open position by a movement of the pusher element wherein the vehicle (1) is configured to drive autonomously over the floor surface (100)

2. The vehicle (1) of claim 1, wherein the filling opening cover (9) is configured to actuate, in its open position, a filling device (52) of a filling station (50) to release litter material (200).

3. The vehicle (1) of claim 1 or 2, wherein the filling opening cover (9) is rotatably mounted on the vehicle (1).

4. The vehicle (1) of any of the preceding claims, wherein the pusher element (8) is movable towards and away from the dispensing opening (5), and wherein the filling opening cover (9) is moved to the open position by a movement of the pusher element (8) away from the dispensing opening (5).

5. The vehicle (1) of the preceding claim, wherein the pusher element (8) comprises a first contact surface (11) and the filling opening cover (9) comprises a second contact surface (12), and wherein during the movement of the pusher element (8) away from the dispensing opening (5) the first contact surface (11) is pushed against the second contact surface (12) to move the filling opening cover (9) from the closed position to the open position.

6. The vehicle (1) of any of the preceding claims, wherein the vehicle (1) comprises a vehicle cover (10) and wherein the filling opening cover (9) is mounted on the vehicle cover (10).

7. The vehicle (1) of any of the preceding claims, wherein the vehicle (1) is a cleaning vehicle and comprises a contact cleaning device configured to clean the floor surface (100) of the accommodation by moving over the floor surface (100) while being in contact with the floor surface (100).

8. The vehicle (1) of the preceding claim, wherein the vehicle (1) comprises a tilting Device (14) to tilt a main body (15) of the vehicle (1) between a tilted position in which the vehicle (1)
can be moved over the floor surface (100) without contact between the contact cleaning device and the floor surface (100), and a cleaning position in which the vehicle (1) can be moved over the floor surface (100) with contact between the contact cleaning device and the floor surface (100).

9. The vehicle (1) of any of the preceding claims, wherein the vehicle (1) comprises a dispensing device (7) to dispense material from the container (4) through the dispensing opening (5).

10. A system for transporting litter material (200) to or within an accommodation for an animal, comprising:
- an unmanned wheeled vehicle (1) as claimed in any of the preceding claims, and
- a filling station (50), said filling station (50) comprising:
- a storage container (51) to hold a quantity of litter material (200), and
- a filling device (52) configured to dispense a quantity of litter material (200) into the container (4) of the vehicle (1) when the vehicle (1) is positioned in a filling position with respect to the filling station (50), wherein the filling station (50) comprises a sensor (53) to determine whether the vehicle (1) is arranged in the filling position with the filling opening cover (9) in theopen position.

11. The system of claim 10, wherein the filling device (52) is configured to dispense a quantity of litter material (200) when the filling station (50) receives a signal from the sensor (53) representative for the vehicle (1) being arranged in the filling position with the filling opening cover (9) in the open position.

12. The system of claim 10 or 11, wherein the filling device (52) comprises a rotatable drum (54) arranged at or in a litter material outlet (55) of the storage container (51), and a driving device (56) to drive the rotatable drum (54).

13. The system of any of the claims 10-12, wherein the sensor (53) is a mechanical contact sensor.

14. The system of any of the claims 10-12, wherein the sensor (53) is an optical sensor.

## Patentansprüche

1. Unbemanntes Radfahrzeug (1) zum Transportieren von Tierstreumaterial (200) zu oder innerhalb einer Unterbringungsbox für ein Tier, wobei das Fahrzeug (1) einen Behälter (4) umfasst, um eine Menge an Tierstreumaterial (200) aufzunehmen, und eine Abgabeöffnung (5) zum Abgeben von Tierstreumaterial (200) aus dem Behälter (4) aufweist,
**dadurch gekennzeichnet, dass** der Behälter (4) eine Füllöffnung (6) zur Einbringung von Tierstreumaterial (200) in den Behälter (4) und eine Füllöffnungsabdeckung (9) aufweist, die zwischen einer geschlossenen Position, in der die Füllöffnung (6) im Wesentlichen durch die Füllöffnungsabdeckung (9) bedeckt ist, und einer offenen Position bewegbar ist, in der die Füllöffnung (6) mindestens teilweise nicht durch die Füllöffnungsabdeckung (9) bedeckt ist, um zu ermöglichen, dass der Behälter (4) mit Tierstreumaterial (200) gefüllt wird,
wobei Behälter (4) ein Schieberelement (8) umfasst, das bewegbar in dem Behälter (4) angeordnet ist und ausgestaltet ist, um Tierstreumaterial (200) in Richtung der Abgabeöffnung (6) zu schieben, und wobei die Füllöffnungsabdeckung (9) ausgestaltet ist, um durch eine Bewegung des Schieberelements aus der geschlossenen Position in die offene Position bewegt zu werden, wobei das Fahrzeug (1) ausgestaltet ist, um autonom über die Bodenoberfläche (100) zu fahren.

2. Fahrzeug (1) nach Anspruch 1, wobei die Füllöffnungsabdeckung (9) ausgestaltet ist, um in ihrer offenen Position eine Füllvorrichtung (52) einer Füllstation (50) zu betätigen, um Einstreumaterial (200) freizugeben.

3. Fahrzeug (1) nach Anspruch 1 oder 2, wobei die Füllöffnungsabdeckung (9) drehbar an dem Fahrzeug (1) montiert ist.

4. Fahrzeug (1) nach einem der vorhergehenden Ansprüche, wobei das Schieberelement (8) zu der Abgabeöffnung (5) hin und von dieser weg bewegbar ist, und wobei die Füllöffnungsabdeckung (9) durch eine Bewegung des Schieberelements (8) von der Abgabeöffnung (5) weg zu der offenen Position bewegt wird.

5. Fahrzeug (1) nach dem vorhergehenden Anspruch, wobei das Schieberelement (8) eine erste Kontaktoberfläche (11) umfasst und die Füllöffnungsabdeckung (9) eine zweite Kontaktoberfläche (12) umfasst, und wobei während der Bewegung des Schieberelements (8) weg von der Abgabeöffnung (5) die erste Kontaktoberfläche (11) gegen die zweite Kontaktoberfläche (12) geschoben wird, um die Füllöffnungsabdeckung (9) aus der geschlossenen Position in die offene Position zu bewegen.

6. Fahrzeug (1) nach einem der vorhergehenden Ansprüche, wobei das Fahrzeug (1) eine Fahrzeugabdeckung (10) umfasst, und wobei die Füllöffnungsabdeckung (9) auf der Fahrzeugabdeckung (10) montiert ist.

7. Fahrzeug (1) nach einem der vorhergehenden Ansprüche, wobei das Fahrzeug (1) ein Reinigungsfahrzeug ist und eine Kontaktreinigungsvorrichtung umfasst, die ausgestaltet ist, um die Bodenoberfläche (100) der Unterbringungsbox zu reinigen, indem sie über die Bodenoberfläche (100) bewegt wird, während sie sich in Kontakt mit der Bodenoberfläche (100) befindet.

8. Fahrzeug (1) nach einem der vorhergehenden Ansprüche, wobei das Fahrzeug (1) eine Kippvorrichtung (14) umfasst, um einen Hauptkörper (15) des Fahrzeugs (1) zwischen einer gekippten Position, in der das Fahrzeug (1) ohne Kontakt zwischen der Kontaktreinigungsvorrichtung und der Bodenoberfläche (100) über die Bodenoberfläche (100) bewegt werden kann, und einer Reinigungsposition zu kippen, in der das Fahrzeug (1) mit Kontakt zwischen der Kontaktreinigungsvorrichtung und der Bodenoberfläche (100) über die Bodenoberfläche (100) bewegt werden kann.

9. Fahrzeug (1) nach einem der vorhergehenden Ansprüche, wobei das Fahrzeug (1) eine Abgabevorrichtung (7) umfasst, um Material aus dem Behälter (4) durch die Abgabeöffnung (5) hindurch abzugeben.

10. System zum Transportieren von Tierstreumaterial (200) zu oder innerhalb einer Unterbringungsbox für ein Tier, umfassend:
- ein unbemanntes Radfahrzeug (1) gemäß einem der vorhergehenden Ansprüche, und
- eine Füllstation (50), wobei die Füllstation (50) umfasst:
- einen Lagerbehälter (51), um eine Menge des Tierstreumaterials (200) aufzunehmen, und
- eine Füllvorrichtung (52), die ausgestaltet ist, um eine Menge des Tierstreumaterials (200) in den Behälter (4) des Fahrzeugs (1) abzugeben, wenn das Fahrzeug (1) in einer Füllposition in Bezug zu der Füllstation (50) positioniert ist, wobei die Füllstation (50) einen Sensor (53) umfasst, um zu bestimmen, ob das Fahrzeug (1) in der Füllposition mit der Füllöffnungsabdeckung (9) in der offenen Position angeordnet ist.

11. System nach Anspruch 10, wobei die Füllvorrichtung (52) ausgestaltet ist, um eine Menge an Tierstreumaterial (200) abzugeben, wenn die Füllstation (50) ein Signal von dem Sensor (53) empfängt, das für das Fahrzeug (1) repräsentativ ist, welches in der Füllposition mit der Füllöffnungsabdeckung (9) in der offenen Position angeordnet ist.

12. System nach Anspruch 10 oder 11, wobei die Füllvorrichtung (52) eine drehbare Trommel (54), die an oder in einem Tierstreumaterialauslass (55) des Lagerbehälters (51) angeordnet ist, und eine Antriebsvorrichtung (56) umfasst, um die drehbare Trommel (54) anzutreiben.

13. System nach einem der Ansprüche 10 bis 12, wobei der Sensor (53) ein mechanischer Kontaktsensor ist.

14. System nach einem der Ansprüche 10 bis 12, wobei der Sensor (53) ein optischer Sensor ist.

## Revendications

1. Véhicule à roues télécommandé (1) destiné à transporter un matériau de litière (200) vers ou dans un logement pour un animal, ledit véhicule (1) comprenant un conteneur (4) pour contenir une quantité de matériau de litière (200) et ayant une ouverture de distribution (5) pour distribuer le matériau de litière (200) à partir du conteneur (4),
**caractérisé en ce que** le conteneur (4) comprend une ouverture de remplissage (6) pour l'introduction de litière (200) dans le conteneur (4) et un couvercle de l'ouverture de remplissage (9) qui est mobile entre une position fermée, dans laquelle l'ouverture de remplissage (6) est sensiblement recouverte par le couvercle de l'ouverture de remplissage (9) et une position ouverte, dans laquelle l'ouverture de remplissage (6) n'est pas, au moins partiellement, recouverte par le couvercle de l'ouverture de remplissage (9) pour permettre au conteneur (4) d'être rempli de litière (200),
dans lequel le conteneur (4) comprend un élément poussoir (8) disposé de manière mobile dans le conteneur (4) et configuré pour pousser le matériau de litière (200) vers l'ouverture de distribution (6), et dans lequel le couvercle de l'ouverture de remplissage (9) est configuré pour être déplacé de la position fermée à la position EP 3178315
ouverte par un mouvement de l'élément poussoir, dans lequel le véhicule (1) est configuré pour s'entraîner de manière autonome sur la surface de plancher (100).

2. Véhicule (1) selon la revendication 1, dans lequel le couvercle de l'ouverture de remplissage (9) est configuré pour actionner, dans sa position ouverte, un dispositif de remplissage (52) d'une station de remplissage (50) pour libérer de la litière (200).

3. Véhicule (1) selon la revendication 1 ou 2, dans lequel le couvercle de l'ouverture de remplissage (9) est monté rotatif sur le véhicule (1).

4. Véhicule (1) selon l'une quelconque des revendications précédentes, dans lequel l'élément poussoir (8) est mobile vers l'ouverture de distribution (5) et s'en éloigne, et dans lequel le couvercle de l'ouverture de remplissage (9) est déplacé vers la position ouverte par un mouvement de l'élément poussoir (8) s'éloignant de l'ouverture de distribution (5).

5. Véhicule (1) selon la revendication précédente, dans lequel l'élément poussoir (8) comprend une première surface de contact (11) et le couvercle de l'ouverture de remplissage (9) comprend une seconde surface de contact (12), et dans lequel, pendant le mouvement de l'élément poussoir (8) s'éloignant de de l'ouverture de distribution (5), la première surface de contact (11) est poussée contre la seconde surface de contact (12) pour déplacer le couvercle de l'ouverture de remplissage (9) de la position fermée à la position ouverte.

6. Véhicule (1) selon l'une quelconque des revendications précédentes, dans lequel le véhicule (1) comprend une carrosserie de véhicule (10) et dans lequel le couvercle de l'ouverture de remplissage (9) est monté sur la carrosserie de véhicule (10).

7. Véhicule (1) selon l'une quelconque des revendications précédentes, dans lequel le véhicule (1) est un véhicule de nettoyage et comprend un dispositif de nettoyage par contact configuré pour nettoyer la surface de plancher (100) du logement en se déplaçant sur la surface de plancher (100) tout en étant en contact avec la surface de plancher (100) .

8. Véhicule (1) selon la revendication précédente, dans lequel le véhicule (1) comprend un dispositif d'inclinaison (14) pour incliner un corps principal (15) du véhicule (1) entre une position inclinée dans laquelle le véhicule (1) peut être déplacé sur la surface de plancher (100) sans contact entre le dispositif de nettoyage de contact et la surface de plancher (100), et une position de nettoyage dans laquelle le véhicule (1) peut être déplacé sur la surface de plancher (100) avec contact entre le dispositif de nettoyage de contact et la surface de plancher (100).

9. Véhicule (1) selon l'une quelconque des revendications précédentes, dans lequel le véhicule (1) comprend un dispositif de distribution (7) pour distribuer du matériau à partir du conteneur (4) à travers l'ouverture de distribution (5).

10. Système de transport de matériau de litière (200) vers ou à l'intérieur d'un logement pour un animal, comprenant :
- un véhicule à roues télécommandé (1) tel que revendiqué dans l'une des revendications précédentes, et
- une station de remplissage (50), ladite station de remplissage (50) comprenant :
- un conteneur de stockage (51) pour contenir une quantité de matériau de litière (200), et
- un dispositif de remplissage (52) configuré pour distribuer une quantité de matériau de litière (200) dans le conteneur (4) du véhicule (1) lorsque le véhicule (1) est positionné dans une position de remplissage par rapport à la station de remplissage (50), dans lequel la station de remplissage (50) comprend un capteur (53) pour déterminer si le véhicule (1) est disposé dans la position de remplissage avec le couvercle de l'ouverture de remplissage (9) dans la position ouverte.

11. Système selon la revendication 10, dans lequel le dispositif de remplissage (52) est configuré pour distribuer une quantité de matériau de litière (200) lorsque la station de remplissage (50) reçoit un signal du capteur (53) représentatif du véhicule (1) dans la position de remplissage, le couvercle de l'ouverture de remplissage (9) étant disposé en position ouverte.

12. Système selon la revendication 10 ou 11, dans lequel le dispositif de remplissage (52) comprend un tambour rotatif (54) disposé sur ou dans une sortie de matériau de litière (55) du conteneur de stockage (51), et un dispositif d'entraînement (56) pour entraîner le tambour rotatif (54).

13. Système selon l'une quelconque des revendications 10 à 12, dans lequel le capteur (53) est un capteur à contact mécanique.

14. Système selon l'une quelconque des revendications 10 à 12, dans lequel le capteur (53) est un capteur optique.
